Europäisches Patentamt

European Patent Office

Office européen des brevets

(19)

(11) Veröffentlichungsnummer: **0 089 535**

**B1**

(12) # EUROPÄISCHE PATENTSCHRIFT

(45) Veröffentlichungstag der Patentschrift:
05.11.86

(51) Int. Cl.⁴: **F 16 B 2/12, E 04 C 2/42**

(21) Anmeldenummer: **83102185.2**

(22) Anmeldetag: **05.03.83**

(54) Schraubbare Stossverbindung für Gitterroste.

(30) Priorität: **15.03.82 DE 8207179 U**

(43) Veröffentlichungstag der Anmeldung:
**28.09.83 Patentblatt 83/39**

(45) Bekanntmachung des Hinweises auf die Patenterteilung:
**05.11.86 Patentblatt 86/45**

(84) Benannte Vertragsstaaten:
**AT BE DE FR GB IT NL**

(56) Entgegenhaltungen:
**GB-A-714 331**
**GB-A-931 134**

(73) Patentinhaber: **Knips, Heinz, Bergmühle 116, D-4300 Essen 11 (DE)**

(72) Erfinder: **Knips, Heinz, Bergmühle 116, D-4300 Essen 11 (DE)**

(74) Vertreter: **Weisse, Jürgen, Dipl.- Phys., Bökenbusch 41 Postfach 11 03 86, D-5620 Velbert 11- Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft eine schraubbare Stoßverbindung für Gitterroste bestehend aus zwei Klemmen die zum Übergreifen der oberen bzw. unteren Kanten benachbarter Randleisten gebogen und durch eine Schraubverbindung mit einem Gewindebolzen und einer Mutter gegeneinander und gegen die Randleisten festziehbar sind.

Eine solche schraubbare Stoßverbindung für Gitterroste ist bekannt durch die GB-A-714 331, insbesondere Fig.6. Bei dieser bekannten Stoßverbindung besteht jede Klemme aus einem Blechstreifen mit einem ebenen Mittelteil und davon an beiden Enden nach einer Seite abgewinkelten Endteilen, wobei jeder Endteil wiederum am Ende mit einer hakenförmigen Umbiegung versehen ist. Die Randleisten an den Stoßkanten der Gitterroste liegen im Abstand voneinander. Die eine Klemme greift mit je einer ihrer Umbiegungen über die Oberkanten der beiden Randleisten. Die andere Klemme greift mit je einer ihrer Umbiegungen über die Unterkanten der beiden Randleisten. Die Mittelteile der beiden Klemmen werden durch einen Gewindebolzen und eine Mutter gegeneinandergezogen. Dadurch werden die Klemmen mit den Umbiegungen gegen die Randleisten festgezogen.

Bei dieser bekannten Stoßverbindung liegen die Randleisten an den Stoßkanten der Gitterroste im Abstand voneinander, so daß zwischen den Gitterrosten eine unerwünschte Lücke bleibt. Der Gewindebolzen erstreckt sich durch die Lücke zwischen den zu verbindenden Gitterrosten. Zum Festziehen des Gewindebolzens muß die Mutter von der Unterseite der Gitterroste her gehalten werden. Auch können sich durch Belastung die Ränder der Gitterroste durchbiegen, so daß sich Stolperkanten im Stoßbereich unterschiedlich belasteter Gitterroste bilden.

Durch die GB-A-931 134 ist eine Klemmvorrichtung bekannt, durch welche ein Gitterrost an einem Träger festklemmbar ist, auf dem der Gitterrost mit seinem Rand aufliegt. Die Klemmvorrichtung enthält eine erste Klemme, die mit einer Umbiegung über die Oberkante einer einzigen Randleiste des Gitterrostes greift. Diese Randleiste verläuft senkrecht zur Längsrichtung des besagten Trägers. Eine zweite Klemme weist einen im Querschnitt U-förmigen Teil auf, der mit den Kanten der beiden U-Schenkel an der Unterseite des Trägers anliegt und mit einem Gewindebolzen und einer Mutter gegen die erste Klemme festgezogen wird, wodurch wiederum der Gitterrost an den Träger festgeklemmt wird.

Bei dieser bekannten Anordnung handelt es sich nicht um eine Stoßverbindung, bei welcher zwei benachbarte Randleisten von Gitterrosten miteinander verbunden werden. Für diesen Zweck ist die bekannte Anordnung weder bestimmt noch geeignet.

Der Erfindung liegt die Aufgabe zugrunde, eine schraubbare Stoßverbindung für Gitterroste zu schaffen, bei welcher Verbindungsglieder leicht von oben durch Öffnungen der zu verbindenden Gitterroste eingeführt und festgezogen werden können und eine sichere Stoßverbindung der Gitterroste ohne Ausbildung von Stolperkanten ermöglichen.

Erfindungsgemäß wird diese Aufgabe dadurch gelöst, daß

- jede der beiden Klemmen ein einziges, streifenförmiges, U-förmig gebogenes Teil aufweist, das mit seinem U-Bogen gleichzeitig über die betreffenden Kanten beider benachbarter Randleisten greift und das auf einer Seite einen verlängerten Schenkel aufweist,

- an dem längeren Schenkel der einen Klemme eine Führung für den Gewindebolzen seitlich befestigt ist und

- an dem längeren Schenkel der anderen Klemme eine Mutter fluchtend mit der Führung seitlich befestigt ist, wobei sich der Gewindebolzen durch die Führung erstreckt und mit der Mutter in Eingriff ist.

Ein solches Verbindungslied kann so bemessen werden, daß es sich ohne weiteres von oben durch die Öffnungen der zu verbindenden Gitterroste einführen läßt. Dazu wird vorher der Gewindebolzen soweit gelockert, daß sich die U-förmig gebogenen Teile der beiden Klemmen von der Seite her über die benachbarten Randleisten der zu verbindenden Gitterroste schieben lassen. Es wird dann das Verbindungsglied so angehoben, daß der U-förmige Teil der unteren Klemme die Unterkanten der Randleisten umgreift. Es kann dann der Gewindebolzen von oben festgezogen werden. Die Mutter ist mit der unteren Klemme gegen Verdrehung gesichert. Nach dem Festziehen entsteht eine starre Verbindung, die die Ausbildung von Stolperkanten an der Stoßstelle durch die Durchbiegung beim Belasten der Gitterroste verhindert.

Vorteilhafterweise ist die Mutter eine selbstsichernde Mutter, die eine Lösung des Gewindebolzens infolge der häufig auftretenden federnden Durchbiegungen der Gitterroste verhindert.

Ein Ausführungsbeispiel der Neuerung ist in den Abbildungen dargestellt und wird nachfolgend an Hand der Bezugszeichen im einzelnen erläutert und beschrieben. Es zeigen:

Fig. 1 einen Schnitt durch das neuerungsgemäße Verbindungsglied und die Randleisten zweier auf Stoß aneinanderliegender Gitterroste,

Fig. 2 eine Seitenansicht der Anordnung nach Fig. 1,

Fig. 3 eine Draufsicht auf die Anordnung nach Fig. 1,

Fig. 4 eine Ansicht der ersten und

Fig. 5 eine Ansicht der zweiten U-förmigen Klemme bei dem Verbindungsglied nach Fig. 1.

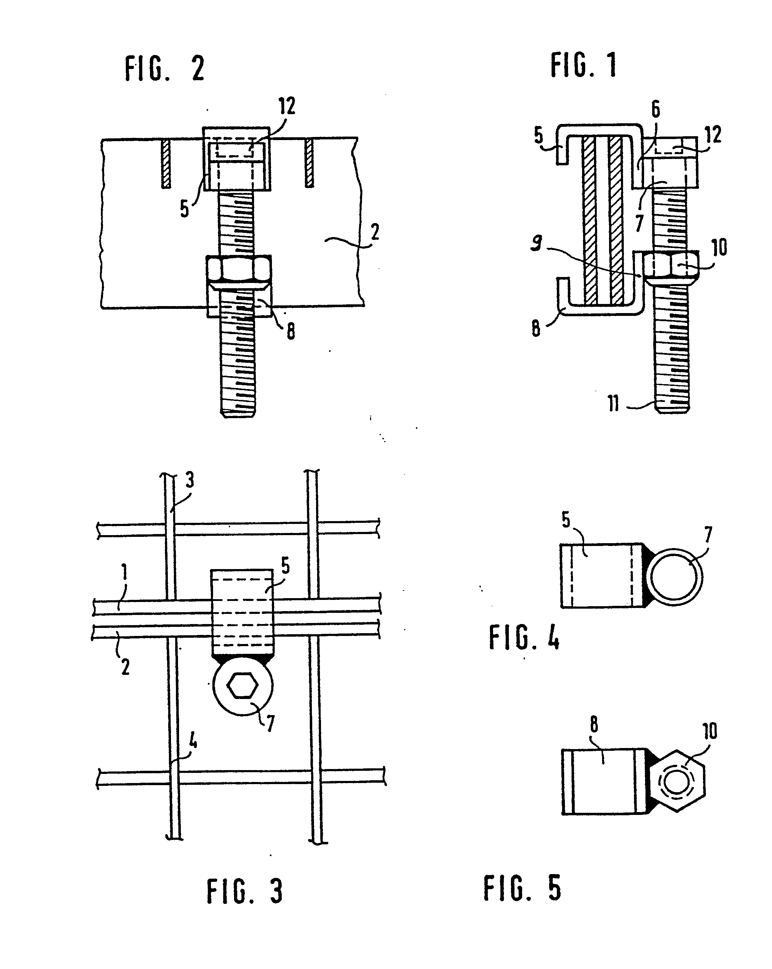

In der Längsschnittdarstellung von Fig. 1 erkennt man die Randleisten 1,2 zweier benachbarter Gitterroste 3 bzw. 4, deren Gitter in Fig. 3 angedeutet sind. Das Verbindungsglied für die Randleisten 1, 2 besteht aus einer ersten U-förmigen Klemme 5 mit einem verlängerten Schenkel 6, an dessen Außenseite eine zylindrische Führung 7 sicher, z.B. durch Schweißen, befestigt ist (vgl. Fig. 4), und aus einer zweiten U-förmigen Klemme 8 mit einem verlängerten Schenkel 9, an dessen Außenseite eine selbstsichernde Mutter 10 sicher, z.B. durch Schweißen, befestigt ist, die ein erstes Schraubglied bildet. Die erste U-förmige Klemme 5 umgreift die Randleisten 1, 2 von oben, und die zweite U-förmige Klemme 8 umgreift die Randleisten 1, 2 von unten. Die U-förmigen Klemmen 5, 8 sind durch einen Gewindebolzen 11, der ein zweites Schraubglied bildet, miteinander schraubbar verbunden, der sich durch die Führung 7 erstreckt und durch sein Gewinde mit der selbstsichernden Mutter 10 in Eingriff ist. Der Kopf 12 des Gewindebolzens 11 ist mit der Oberkante der Gitterroste 3, 4 bündig angeordnet.

Zur Anbringung des Verbindungsgliedes wird der Gewindebolzen 11 durch Eingriff eines geeigneten Werkzeugs so weit verdreht, daß der Abstand zwischen den U-förmigen Klemmen 5, 8 größer ist als die Tiefe der Randleisten 1, 2. Anschließend wird das Verbindungsglied mit der zweiten Klemme 8 von oben durch die Öffnung des Gitterrostes 4 hindurchgeführt und so angeordnet, daß die U-förmigen Klemmen 5, 8 die Randleisten 1, 2 von oben bzw. von unten umgreifen. Das ist leicht zu bewerkstelligen, da die Maße der U-förmigen Klemme 8 kleiner sind als die Weite der Öffnung. Dann wird der Gewindebolzen 11 mit Hilfe des Werkzeugs so weit in entgegengesetzter Richtung verdreht, daß die Randleisten 1, 2 zwischen den U-förmigen Klemmen 5, 8 fest eingeklemmt sind. Durch die selbstsichernde Mutter 10 entsteht so eine Verbindung, die sich auch bei häufiger axialer Beanspruchung infolge Durchbiegens der Gitterroste nicht lockert oder verstellt. Die Verbindung ist starr, so daß im Bereich der Randleisten 1, 2 der auf Stoß verbundenen Gitterroste 3, 4 Durchbiegungen vermieden werden, die Anlaß zur Ausbildung von Stolperkanten geben könnten.

## Patentansprüche

1. Schraubbare Stoßverbindung für Gitterroste (3, 4) bestehend aus zwei Klemmen (5, 8) die zum Übergreifen der oberen bzw. unteren Kanten benachbarter Randleisten (1, 2) gebogen und durch eine Schraubverbindung mit einem Gewindebolzen (11) und einer Mutter (10) gegeneinander und gegen die Randleisten (1, 2) festziehbar sind, dadurch gekennzeichnet, daß
- jede der beiden Klemmen (5, 8) ein einziges, streifenförmiges, U-förmig gebogenes Teil aufweist, das mit seinem U-Bogen gleichzeitig über die betreffenden Kanten beider benachbarter Randleisten (1, 2) greift und das auf einer Seite einen verlängerten Schenkel (6, 9) aufweist,
- an dem längeren Schenkel (6) der einen Klemme eine Führung (7) für den Gewindebolzen (11) seitlich befestigt ist und
- an dem längeren Schenkel (9) der anderen Klemme (8) eine Mutter (10) fluchtend mit der Führung (7) seitlich befestigt ist, wobei sich der Gewindebolzen (11) durch die Führung (7) erstreckt und mit der Mutter (10) in Eingriff ist.

2. Stoßverbindung nach Anspruch 1, dadurch gekennzeichnet, daß der Kopf (12) des Gewindebolzens (11) mit der Oberkante der Gitterroste (3, 4) bündig angeordnet ist.

3. Stoßverbindung nach Anspruch 1, dadurch gekennzeichnet, daß die Mutter (10) eine selbstsichernde Mutter ist.

## Claims

1. Threadably connectable butt-connection for gridirons (3, 4), consisting of two clamps (5, 8) which are arcuately configured in order to extend over the upper and lower edges of adjacent border ledges (1, 2) and which can be tightened against each other and against the border ledges (1, 2) by means of a screw connection using a threaded bolt (11) and a nut (10), characterised in that
- each one of the two clamps (5, 8) comprises a single strip-shaped member bent to a U-shape and which member simultaneously extends over the related edges of the two adjacent border ledges (1, 2) by means of its U-shaped arc and comprises a prolonged leg (6, 9) on one side,
- a guide (7) for the threaded bolt (11) is laterally secured to the prolonged leg (16) of one of the two clamps and
- a nut (10) is laterally secured at the prolonged leg (9) of the other one (8) of the two clamps so as to be aligned with the guide (7), the threaded bolt (11) extending through the guide and being engaged with the nut (10).

2. Butt-connection according to claim 1, characterised in that the head (12) of the threaded bolt (11) is flush arranged with the upper edge of the gridirons (3, 4).

3. Butt-connection according to claim 1, characterised in that the nut (10) constitutes a self-locking nut.

## Revendications

1. Joint bout à bout boulonné pour caillebotis (3, 4) composé de deux attaches (5, 8) arquées de façon à chevaucher les arêtes supérieures et inférieures des rebords contigus (1, 2) et serrées à fond l'une contre l'autre et contre les rebords (1, 2) par une connexion boulonnée comprenant un boulon fileté (11) et un écrou (10),

    caractérisé par le fait que

    - chacune des deux attaches (5, 8) présente une seule pièce en forme de bande en U, cet U couvrant en même temps les arêtes en question des deux rebords contiguës (1, 2), et présentant sur un côté une branche plus longue (6, 9),

    - sur la branche plus longue (6) d'une des attaches un guide (7) est fixé latéralement pour le boulon fileté (11), et

    - sur la branche plus longue (9) de l'autre attache (8) un écrou (10) est fixé latéralement en alignement avec le guide (7), le boulon fileté (11) se trouve alors en prise avec l'écrou (10).

    2. Joint bout à bout selon la revendication 1,

    caractérisé par le fait que la tête (12) du boulon fileté est disposée de sorte à former une surface plane avec l'arête supérieure du caillebotis (3,4).

    3. Joint bout à bout selon la revendication 1,

    caractérisé par le fait que l'écrou (10) est un écrou auto-bloquant.

0 089 535

FIG. 2

FIG. 1

FIG. 3

FIG. 4

FIG. 5

1